# EUROPEAN PATENT APPLICATION

(11) **EP 2 077 630 A1**
(43) Date of publication of application: **08.07.2009**
(21) Application number: 07807376.4
(22) Date of filing: 14.09.2007
(51) Int. Cl.: H04B 7/26, H04L 12/56, H04Q 7/36

(54) **WIRELESS COMMUNICATION APPARATUS AND WIRELESS COMMUNICATION METHOD**

(30) Priority: 27.10.2006 JP 2006292102
(71) Applicant: Panasonic Corporation, Kadoma-shi Osaka 571-8501 (JP)
(72) Inventor: HORIUCHI, Ayako c/o Panasonic Corporation, IPROC, Chuo-ku, Osaka-shi, Osaka 540-6207 (JP); HIRAMATSU, Katsuhiko c/o Panasonic Corporation, IPROC, Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2007/067972
(87) International publication number: WO 2008/050553

(57) **Abstract**

The present invention has an object to provide a wireless communication apparatus and a wireless communication method, which are capable of measuring line qualities as to a plurality of channels in a high efficiency without giving an adverse influence to communications made by other mobile stations in such a case that a mobile station is communicated with a base station via a relay station.

In a frame 1, a mobile station "MS" transmits a packet "MS(1)" via a channel "CH1" to a relay station "RS", and the relay station "RS" transmits a packet "RS[MS(0)]" via a channel "CH2" to a base station. In this case, symbol "MS(1)" indicates a first packet of the mobile station "MS." Also, symbol "RS[MS(0)]" represents a packet which is relayed by the relay station "RS." Next, in a frame 2, the channels "CHs" of the frame 1 are traded with each other, and then, packets are transmitted via the traded channels "CHs." In other words, the mobile station "MS" transmits a packet "MS(2)" via the channel "CH2" to the relay station "RS", and the relay station "RS" transmits a packet "RS[MS(1)]" via the channel "CH1" to the base station. When the above-described channel trade is performed, the qualities of the channels "CHs" between the mobile station and the relay station can be measured as to the channel "CH1" in the frame 1, and as to the channel "CH2" in the frame 2 by the relay station. As a consequence, it is possible to immediately grasp that the line qualities have been deteriorated.

## Description

### Technical Field

The present invention is related to a wireless communication apparatus and a wireless communication method.

### Background Art

Recently, in cellular mobile communication systems which are typically known as portable telephone systems, since large amounts of information are handled as multimedia data, it is popularized that large amounts of data are transferred which contain not only voice data, but also still image data, and moving picture data. In order to realize large amounts of data transmissions, various sorts of technical ideas capable of achieving high transfer rates by utilizing wireless high-frequency bands have been actively considered.

However, in such a case that the wireless high-frequency bands are utilized, such high transfer rates may be expected in short distances, whereas the longer the transfer distance is increased, the larger the data attenuation is increased due to longer transfer distances. As a consequence, in such a case that mobile communication systems are actually operated by utilizing wireless high-frequency bands, a covering area by each of wireless communication base station apparatuses (will be abbreviated as "base stations" hereinafter) is decreased. As a result, a larger number of such base stations are required to be installed. Since installation cost is necessarily increased in order to install large numbers of these base stations, such technical ideas capable of realizing communication services by utilizing the wireless high-frequency bands, while suppressing an increase in a total number of base stations, have been strongly required.

To meet such a requirement, the below-mentioned relay/transmission technical ideas have been considered. That is, in order to expand covering areas covered by respective base stations, wireless communication relay station apparatuses (will be abbreviated as "relay stations" hereinafter) are installed between base stations and wireless communication mobile station apparatuses (will be abbreviated as "mobile stations" hereinafter); and then, communications between the base stations and the mobile stations are carried out via relay stations. In the above-described relay/transmission technical ideas, allocation numbers of channels are increased, as compared with those of such a communication system realized by employing only a base station and mobile stations, so that these relay/transmission technical ideas become complex.

As channel-allocation technical ideas capable of solving the above-described complex problem, techniques (refer to, for instance, non-patent publication 1) for performing concentrated controls have been proposed. In the conventional technique disclosed in the non-patent publication 1, a concentrated managing station manages frequency channels in a concentration manner and allocates these frequency channels to picocells, so that overall optimum channel-allocation can be achieved. publication 1, a concentrated managing station manages frequency channels in a concentration manner and allocates these frequency channels to picocells, so that overall optimum channel allocation can be achieved.

Non-patent publication 1: RCS2004-341 "A study of channel allocation in Pico-cell system."

### Disclosure of the Invention

### Problems that the Invention is to Solve

However, in the relay/transmission technique described in the above-described non-patent publication 1, since quality information of channels is acquired by the concentrated managing station, variations of qualities between mobile stations and a relay station cannot be grasped in real time, by the concentrated managing station, so that control delays may occur.

Fig. 16 is a sequence diagram for explaining a channel changing method of a conventional system. Fig. 17 is a diagram for explaining a frame structure employed in the channel changing method of the conventional system. Referring now to Fig. 16 and Fig. 17, a description is made of operation flows defined after a quality of a channel has been lowered until the channel is changed.

While channel allocation has already been set with respect to a frame 1, a channel "CH3" has been allocated to a communication established from a mobile station "MS" to a relay station "RS", and another channel "CH4" has been allocated to a communication established from the relay station "RS" to a base station "BS." It is so assumed that a new channel is allocated from a frame 2.

In this case, the allocation information of the frame 2 is transmitted from the base station "BS" to the relay station "RS" before the above-described frame 1. In the frame 1, the mobile station "MS" transmits a packet "MS(1)" via the previously set channel "CH3" to the relay station "RS", and the relay station "RS" transmits a packet "RS[MS(0)]" via the previously set channel "CH4" to the base station "BS."

Before the frame 2, allocation information of the frame 2 is relayed from the relay station "RS" to the mobile station "MS." In accordance with the allocation information of the frame 2, the mobile station "MS" transmits a packet "MS(2)" via the channel "CH1" to the relay station "RS", and then, the relay station "RS" transmits a packet "RS[MS(1)]" via a channel "CH2" to the base station "BS."

Next, in a frame 3, the mobile station "MS" transmits a packet "MS(3)" via a channel "CH1" to the relay station "RS", and the relay station "RS" transmits a packet "RS[MS(2)]" via the channel "CH2" to the base station "BS." Also, in a frame 4, the mobile station "MS" transmits a packet "MS(4)" via the channel CH1 to the relay station "RS", and the relay station "RS" transmits a packet "RS[MS(3)]" via the channel CH2 to the base station "BS."

In this example, a quality of the channel "CH1" from the mobile station "MS" to the relay quality between the mobile station and the relay station is deteriorated, the relay station notifies the quality deterioration to the base station and the base station performs the re-scheduling operation. As a result, a lengthy time is required until signaling of channels is newly performed from the base station, and the mobile station has continuously used the channel whose quality is low until the new channel-allocation is notified. In contrast to the above-explained conventional technique, in accordance with the above-described arrangement, the channel allocated between the mobile station and the relay station, and the channel allocated between the relay station and the base station are alternately used, so that such a frequency at which the channel whose quality is low is used can be reduced.

Also, the wireless communication apparatus of the present invention includes: a channel-allocation information extracting unit for extracting channel-allocation information transmitted from the base station; a channel-trade instructing unit for outputting such an instruction that the channel allocated between the base station and the wireless communication apparatus is traded with the channel allocated between the mobile station and the wireless communication apparatus; and a channel allocating unit for allocating the channels in accordance with the instruction of the channel-trade instructing unit.

In accordance with the above-described arrangement, since the channels are alternately used, the qualities of the lines as to the alternately used channels between the mobile station and the relay station can be measured. If the measuring frequency of the line qualities becomes high, then the control delay becomes small, so that the optimum overall scheduling can be easily carried out.

Also, in the wireless communication apparatus of the present invention, if the channel-allocation information corresponds to the latest channel-allocation information, then the channel-trade instructing unit outputs an instruction that the channels are allocated in accordance with the latest channel-allocation information, whereas if the channel-allocation information does not correspond to the latest channel-allocation information, then the channel-trade instructing unit outputs an instruction that the channel allocated between the base station and the wireless communication apparatus, and also, the channel allocated between the mobile station and the wireless communication apparatus are alternately used.

Further, a wireless communication apparatus, according to the present invention, is such a wireless communication apparatus for relaying a communication between a base station and a mobile station in accordance with a predetermined channel-allocation rule, comprising: a function for using a plurality of channels which have been allocated between the mobile station and the wireless communication apparatus, and also, a channel which has been allocated between the base station and the wireless communication apparatus in a rotation manner in accordance with the rule which is commonly used between the mobile station and the wireless communication apparatus.

In accordance with the above-explained arrangement, since the channels are utilized in the rotation manner, a total number of the channels capable of measuring the line qualities between the mobile station and the relay station can be increased, and the line qualities as to the plurality of channels can be measured in a high efficiency by a single mobile station without giving adverse influences to communications made by other mobile stations.

Also, the wireless communication apparatus of the present invention includes: a function that if channel-allocation information transmitted from the base station does not correspond to the latest channel-allocation information, then the plurality of channels which have been allocated between the mobile station and the wireless communication apparatus, and also, the channel which has been allocated between the base station and the wireless communication apparatus are used in the rotation manner; whereas if the channel-allocation information corresponds to the latest channel-allocation information, then the channels are used in accordance with the latest channel-allocation information.

Also, the wireless communication apparatus of the present invention includes: a quality deterioration judging unit for judging a deterioration of a quality of a signal received from the mobile station; and in which: the channel-trade instructing unit outputs an instruction that the channels are allocated in accordance with the channel-allocation information if the channel-allocation information corresponds to the latest channel-allocation information; if the channel-allocation information does not correspond to the latest channel-allocation information, in such a case that the quality deterioration judging unit judges that the quality of the signal received from the mobile station has not be deteriorated, then the channel-trade instructing unit outputs an instruction that the channel allocated between the mobile station and the wireless communication apparatus is traded with the channel allocated between the base station and the wireless communication apparatus, whereas in such a case that the quality of the signal has been deteriorated, the channel-trade instructing unit outputs an instruction that the channel used in the communication between the mobile station and the wireless communication apparatus is used in a communication between the base station and the wireless communication apparatus.

In accordance with the above-described arrangement, if the relay station judges that the quality of the channel has been deteriorated, then the relay station notifies the deterioration of the channel to the mobile station, and ceases that the channel allocated between the mobile station and the relay station, and also, another channel allocated between the relay station and the base station are alternately utilized, and then, fixes the channels. Only such channels whose qualities are good can be used between the mobile station and the relay station.

Also, the wireless communication apparatus of the present invention includes: means for receiving a channel transition pattern transmitted from the base station.

Also, the wireless communication apparatus of the present invention includes: means for holding a table indicative of the channel transition pattern.

In accordance with the above-explained arrangement, while both the mobile station and the relay station commonly use the table indicative of the channel transition patterns and allocate the channels, the relay station can move the channels. As a result, the signaling amount can be reduced. Also, since the mobile station may merely use such a channel other than the channel through which the relay station transmit, the relay station need not transmit the transition pattern toward the mobile station.

Further, a wireless communication apparatus, according to the present invention, is a wireless communication apparatus for communicating a base station via a relay station in accordance with a predetermined channel-allocation rule, comprising: a function for alternately using a channel which has been allocated between the relay station and the wireless communication apparatus, and a channel which has been allocated between the base station and the relay station in accordance with a rule which is commonly used by the relay station and the wireless communication apparatus.

In accordance with the above-described arrangement, when the data is transmitted, the channel allocated between the mobile station and the relay station, and also, the channel allocated between the relay station and the base station are alternately used so as to continuously measure the qualities of the lines, so that the line qualities of the plural channels can be measured in a high efficiency.

Also, the wireless communication apparatus of the present invention includes: a channel-allocation information extracting unit for extracting channel-allocation information transmitted from the relay station; a channel-trade instructing unit for outputting such an instruction that the channel allocated between the relay station and the wireless communication apparatus is traded with the channel allocated between the relay station and the base station; and a channel allocating unit for allocating the channels in accordance with the instruction of the channel-trade instructing unit.

In accordance with the above-described arrangement, since the channels are alternately used, the qualities of the lines as to the alternately used channels between the mobile station and the relay station can be measured. If the measuring frequency of the line qualities becomes high, then the control delay becomes small, so that the optimum overall scheduling can be easily carried out.

Also, in the wireless communication apparatus of the present invention, if the channel-allocation information inputted from the channel-allocation information extracting unit corresponds to the latest channel-allocation information, then the channel allocating unit allocates the channels in accordance with the latest channel-allocation information, whereas if the channel-allocation information inputted from the channel-allocation information extracting unit does not correspond to the latest channel-allocation information, then the channel allocating unit allocates the channels in accordance with the channel-trade instruction instructed from the channel trade instructing unit.

Further, a wireless communication apparatus, according to the present invention, is such a wireless communication apparatus for communicating a base station via a relay station in accordance with a predetermined channel-allocation rule, comprising: a function for using a plurality of channels which have been allocated between the relay station and the wireless communication apparatus, and also, a channel which has been allocated between the base station and the relay station in a rotation manner in accordance with the rule which is commonly used between the relay station and the wireless communication apparatus.

In accordance with the above-explained arrangement, since the channels are utilized in the rotation manner, a total number of the channels capable of measuring the line qualities between the mobile station and the relay station can be increased, and the line qualities as to the plurality of channels can be measured in a high efficiency by a single mobile station without giving adverse influences to communications made by other mobile stations.

Also, the wireless communication apparatus of the present invention includes: a function that if channel-allocation information transmitted from the relay station does not correspond to the latest channel-allocation information, then the plurality of channels which have been allocated between the relay station and the wireless communication apparatus, and also, another channel which has been allocated between the base station and the relay station are used in the rotation manner; whereas if the channel-allocation information corresponds to the latest channel-allocation information, then the channels are used in accordance with the latest channel-allocation information.

Also, the wireless communication apparatus of the present invention includes: a function that when a notification that a quality of a channel under use is low is received from the relay station, the wireless communication apparatus ceases to use the channel whose quality is low, and continuously uses a channel other than the channel whose quality has been lowered until re-allocation of channels is issued.

In accordance with the above-described arrangement, if the relay station judges that the quality of the channel has been deteriorated, then the relay station notifies the deterioration of the channel to the mobile station, and ceases that the channel allocated between the mobile station and the relay station, and also, another channel allocated between the relay station and a base station are alternately utilized, and then, fixes the channels. Only such channels whose qualities are good can be used between the mobile station and the relay station.

Also, the wireless communication apparatus of the present invention includes: a quality deterioration information extracting unit for extracting quality deterioration information transmitted from the relay station; and in which: the channel-trade instructing unit outputs an instruction that the channel allocating unit obeys the channel-allocation information if the channel-allocation information corresponds to the latest channel-allocation information; if the channel-allocation information does not correspond to the latest channel-allocation information, in such a case that a quality of the channel allocated between the relay station and the mobile station has not be deteriorated in the quality deterioration information, then the channel-trade instructing unit outputs such an instruction that the channel allocated between the relay station and the wireless communication apparatus is traded with the channel allocated between the base station and the relay station, whereas in such a case that the quality of the signal has been deteriorated, the channel-trade instructing unit outputs an instruction that the channel allocated between the relay station and the mobile station is used.

In accordance with the above-described arrangement, if the relay station judges that the quality of the channel has been deteriorated, then the relay station notifies the deterioration of the channel to the mobile station, and ceases that the channel allocated between the mobile station and the relay station, and also, another channel allocated between the relay station and a base station are alternately utilized, and then, fixes the channels. Only such channels whose qualities are good can be used between the mobile station and the relay station.

Also, the wireless communication apparatus of the present invention includes: means for receiving a channel transition pattern transmitted from the relay station.

Also, the wireless communication apparatus of the present invention includes: means for holding a table indicative of the channel transition pattern.

In accordance with the above-explained arrangement, while both the mobile station and the relay station commonly use the table indicative of the channel transition patterns and allocate the channels, the relay station can move the channels. As a result, the signaling amount can be reduced. Also, since the mobile station may merely use such a channel other than the channel through which the relay station transmit, the relay station need not transmit the transition pattern toward the mobile station.

Also, in the wireless communication apparatus of the present invention, the rule which is commonly used between the relay station and the mobile station corresponds to a rule that the rule designates two channels which are used between the mobile station and the relay station, the relay station firstly uses a channel whose channel number is small or large, and the mobile station firstly uses a channel whose channel number is large or small.

Moreover, a wireless communication method, according to the present invention, is featured by such a wireless communication method for relaying a communication between a base station and a mobile station in accordance with predetermined channel-allocation, comprising: a step by which in such a case that channel-allocation information transmitted from the base station is updated, a channel to be used in a communication between the mobile station and the base station is allocated in accordance with the channel-allocation information; a step by which in such a case that the channel-allocation information transmitted from the base station is not updated, a judgment is made whether or not a quality of a channel used in a communication with the mobile station has been deteriorated; a step by which in such a case that the quality deterioration has been made in the channel used in the communication with the mobile station, the channel used in the communication with the mobile station is allocated to the channel used in the communication with the base station; and a step by which in such a case that the quality deterioration has not been made in the channel used in the communication with the mobile station, the channel used in the communication with the mobile station is traded with the channel used in the communication with the base station.

In accordance with the above-described arrangement, if the relay station judges that the quality of the channel has been deteriorated, then the relay station notifies the deterioration of the channel to the mobile station, and ceases that the channel allocated between the mobile station and the relay station, and also, another channel allocated between the relay station and a base station are alternately utilized, and then, fixes the channels. Only such channels whose qualities are good can be used between the mobile station and the relay station.

### Advantage of the Invention

In accordance with the wireless communication apparatus and the wireless communication method related to the present invention, in such a case that the mobile station is communicated to the base station via the relay station, the line qualities as to the plurality of channels can be measured in the high efficiency without giving adverse influences to the communications made by other mobile stations.

### Brief Description of the Drawings

Fig. 1 is a diagram for explaining a schematic arrangement of a wireless communication system according to embodiments of the present invention.
Fig. 2 is a diagram for explaining a frame structure provided in the wireless communication system according to the embodiments of the present invention.
Fig. 3 is a diagram for explaining a frame structure provided in the wireless communication system according to the embodiment (1) of the present invention.
Fig.4 is a block diagram of a relay station apparatus related to the embodiment (1) of the present invention.
Fig. 5 is a block diagram of a mobile station apparatus related to the embodiment (1) of the present invention.
Fig. 6 is a diagram for explaining a frame structure provided in a wireless communication system according to an embodiment (1-1) of the present invention.
Fig. 7 is a diagram for explaining a frame structure provided in a wireless communication system according to an embodiment (2) of the present invention.
Fig. 8 is a diagram for explaining a frame structure provided in a wireless communication system according to an embodiment (2-1) of the present invention.
Fig. 9 is a diagram for explaining a frame structure provided in a wireless communication system according to an embodiment (3) of the present invention.
Fig. 10 is a block diagram for showing a relay station apparatus according to an embodiment (3) of the present invention.
Fig. 11 is a flow chart for describing operations of the relay station apparatus according to the embodiment (3) of the present invention.
Fig. 12 is a block diagram for representing a mobile station apparatus according to the embodiment (3) of the present invention.
Fig. 13 is the diagram for describing the frame structure as to the line quality measuring method of the conventional system.

### Description of Reference Numerals and Signs

- 100: mobile station
- 111: coding unit
- 112: modulating unit
- 113,212: CH allocating unit
- 114, 215: wireless transmitting unit
- 115, 217: transmission antenna
- 116, 211: CH allocation information extracting unit
- 117: CH trade instructing unit
- 118: decoding unit
- 119: demodulating unit
- 120, 216: wireless receiving unit
- 121, 218: reception antenna
- 200: relay station
- 214: quality deterioration judging unit
- 300: base station

### Best Mode for Carrying Out the Invention

Referring now to accompanying drawings, a description is made of embodiments of the present invention. The below-mentioned wireless communication apparatus corresponds to such a wireless communication apparatus which relays/transmits a signal transmitted from a first wireless communication apparatus to a second wireless communication apparatus, and is designed to be mounted on, for instance, a relay station which is used in a mobile communication system. It should be understood that in the below-mentioned respective embodiments, the wireless communication apparatus which performs the relay and transmission operations will be referred to as a relay station; the first wireless communication apparatus will be referred to as a mobile station; and the second wireless communication will be referred to as a base station.

### (EMBODIMENT 1)

In the present embodiment 1, two sets of channels "CHs", namely, a channel (channel "CH" which has been allocated to communication from mobile station to relay station) which is being used between a mobile station and a relay station, and another channel "CH" which has been allocated between the relay station and a base station are alternately utilized in a communication established between the mobile station and the relay station. Since a pilot signal is necessarily transmitted when data is transmitted, if the channels "CHs" are alternately used, then line qualities between the mobile station and the relay station with respect to these two channels "CHs" under use in the alternate manner can be measured. If a frequency at which line qualities are measured is increased, then a control delay is decreased, so that overall optimum channel scheduling can be easily carried out.

### [SYSTEM STRUCTURE]

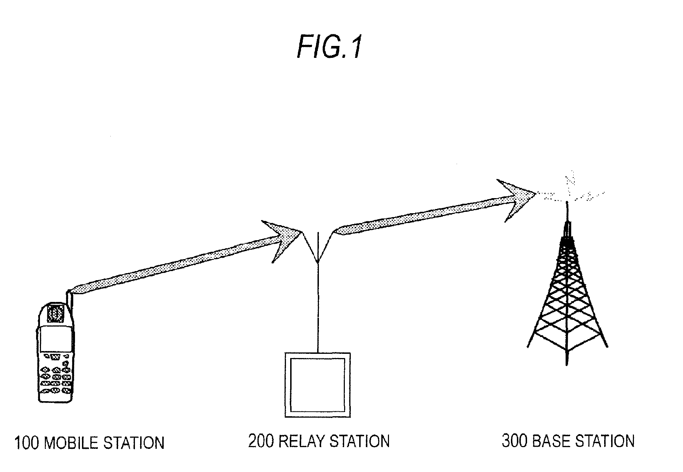

In a mobile communication system related to each of the below-mentioned embodiments, as shown in Fig. 1, a relay station (RS) 200 relays and transmits a transmission signal transmitted from a mobile station (MS) 100 to a base station (BS) 300. The mobile station 100, the relay station 200, and the base station 300 mutually perform transmitting/receiving operations in a synchronous manner, while a plurality of frames having a predetermined time length are employed as a single unit.

The base station 300 performs scheduling of channels contained in the frames. A scheduling result is transmitted from the base station 300 to the relay station 200, and then, the transmitted scheduling result is relayed from the relay station 200 to the mobile station 100. Both the mobile station 100 and the relay station 200 perform transmitting operations in accordance with the scheduling result notified from the base station 300. It should be understood that the above-described scheduling operation implies that channels (CHs) contained in the frames are allocated which are utilized between the mobile station 100 and the relay station 200, and also, between the relay station 200 and the base station 300.

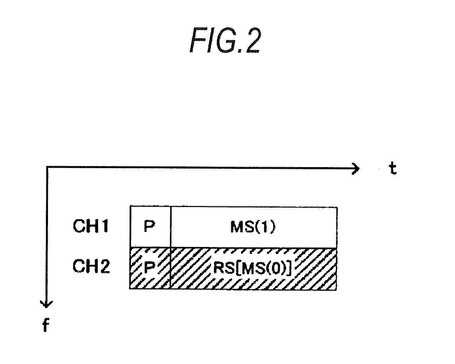

A structure of the frames structure is represented in Fig. 2. Scheduling of channels has been notified from a base station. The base station allocates a channel "CH1" between a mobile station "MS" and a relay station "RS" and allocates a channel "CH2" between the relay station "RS" and the base station BS. A frame includes a pilot portion "P" and a data portion. While a known signal has been allocated to the pilot portion "P", if the pilot portion "P" is received, then a line quality of the relevant channel "CH" can be measured.

In a frame 1, the mobile station "MS" transmits a packet "MS(1)" via the channel "CH1" to the relay station "RS", and the relay station "RS" transmits another packet "RS[MS(0)]" via the channel "CH2" to the base station. In this case, symbol "MS(1)" indicates a first packet of the mobile station "MS." Also, symbol "RS[MS(0)]" shows a packet "MS(0)" which is relayed by the relay station "RS."

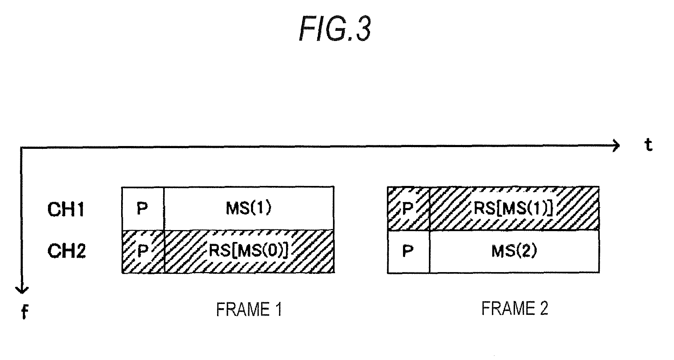

A description is made of operations of the present embodiment with reference to a frame structural diagram (Fig. 3). Similar to Fig. 2, it is so assumed that the scheduling has been notified from the base station. A frame 1 has a similar structure to that of Fig. 2. Next, in a frame 2, a transmission is carried out by trading channels "CHs" used in the frame 1 with each other.

In other words, in the frame 2, the mobile station "MS" transmits a packet "MS(2)" via the channel "CH2" to the relay station "RS", and the relay station "RS" transmits a packet "RS[MS(1)]" via the channel "CH1" to the base station. Since the above-described packet transmitting operation is carried out, qualities of the channels "CHs" between the mobile station "MS" and the relay station "RS" can be measured by the relay station "RS" as to the channel "CH1" in the frame 1, and also, as to the channel "CH2" in the frame 2. As a consequence, it can be immediately grasped that the line qualities have been deteriorated. Also, in the conventional method, when the quality of the channel under use has been deteriorated, the pilot signal has been transmitted in order to measure the quality of another channel. To the contrary, in accordance with the method of the present embodiment, since the normal transmitting operation is carried out, the qualities as to the plurality of channels can be continuously measured without transmitting such a pilot signal for measuring the qualities of the channels.

### [BLOCK DIAGRAM OF RELAY STATION APPARATUS]

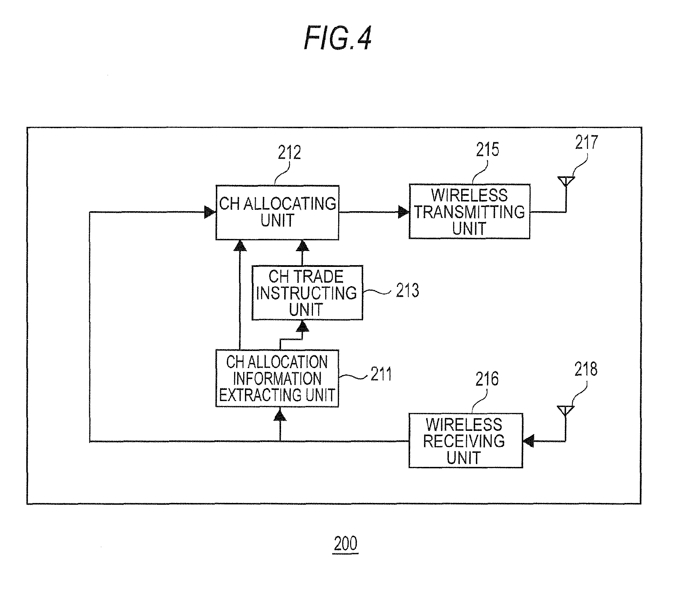

Fig. 4 is a block diagram for indicating an arrangement of the relay station apparatus related to the present embodiment. In the relay station 200, a wireless receiving unit 216 receives a signal transmitted from either the mobile station 100 or the base station 300, and receives allocation information transmitted from the base station 300 via antenna 218, and also, performs a wireless processing operation such as a down converting operation with respect to the received signal and allocation information, and then, outputs the wireless-processed signal and allocation information.

A CH (channel) allocation information extracting unit 211 extracts channel-allocation information transmitted from the base station 300. The extracted allocation information is entered to a CH allocating unit 212 and a CH trade instructing unit 213. In the CH trade instructing unit 213, if the allocation information corresponds to the latest allocation information, then the CH trade instructing unit 213 instructs the CH allocating unit 212 in such a manner that the CH allocating unit 212 allocates a CH in accordance with the allocation information, whereas if the allocation information does not correspond to the latest allocation information, then the CH trade instructing unit 213 instructs the CH allocating unit 212 in such a manner that the channel "CH" between the relay station 200 and the base station 300 is traded with the channel "CH" between the mobile station 100 and the relay station 200.

In the CH allocating unit 212, such a channel "CH" to be allocated is determined based upon the CH allocation information and the instruction issued from the CH trade instructing unit 213, and the determined channel "CH" is allocated to a signal. The signal allocated to the channel "CH" is inputted to a wireless transmitting unit 215. The wireless transmitting unit 215 performs a wireless processing operation such as an up converting operation with respect to the entered relay signal, and then, transmits the wireless-processed relay signal from an antenna 217 to the base station 300.

### [BLOCK DIAGRAM OF MOBILE STATION APPARATUS]

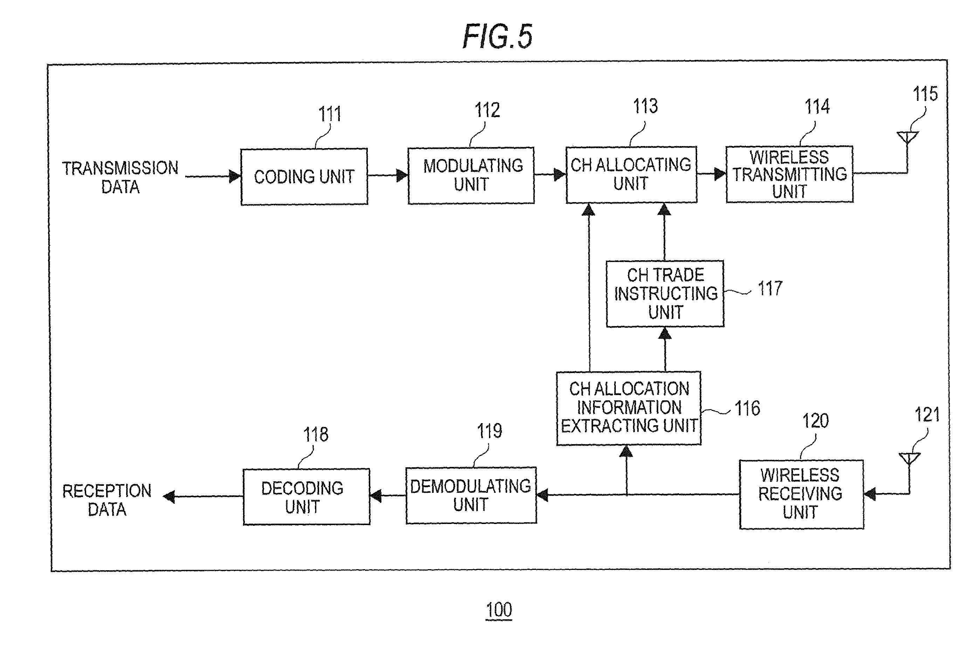

Fig. 5 is a block diagram of the mobile station 100. A description as to commonly used structural elements of Fig. 4 will be omitted in Fig. 5. In a demodulating unit 119, the signal is demodulated, and in a decoding unit 118, the signal is decoded to constitute reception data. The transmission data is coded by a coding unit 111, and the coded transmission data is modulated in a modulating unit 112. The modulated signal is entered to a CH (channel) allocating unit 113.

In the CH allocating unit 113, if CH allocation information inputted from a CH (channel) allocation information extracting unit 116 corresponds to the latest CH allocation information, then the CH allocating unit 113 obeys this latest CH allocation information, whereas if CH allocation information inputted from the CH allocation information extracting unit 116 does not correspond to the latest CH allocation information, then the CH allocating unit 113 obeys the CH trade instruction information received by the CH trade instruction receiving unit 117.

When the CH trade is instructed to the CH allocating unit 113, the CH allocating unit 113 allocates the channel "CH" which has been allocated between the relay station 200 and the base station 300 to such a channel between the mobile station 100 and the relay station 200. When the CH trade is not instructed to the CH allocating unit 113, the CH allocating unit 113 directly allocates the channel "CH" between the mobile station 100 and the relay station 200 without trading the channel "CH."

As previously described, in accordance with the present embodiment, when the data is transmitted from the mobile station to the relay station, since the channel allocated between the mobile station and the relay station, and also, the channel allocated between the relay station and the base station are alternately used, the qualities of the lines to be used can be continuously measured based upon the pilot signals contained in the transmission data. As a result, the line qualities of the plural channels can be measured in a high efficiency without giving an adverse influence to communications made by other mobile stations. In this case, if a measurement result as to the line qualities acquired by receiving the pilot signal is continuously notified to the base station, then the base station can flexibly schedule the channels by avoiding such a line whose quality is deteriorated. Also, if the relay station notifies a measurement result to the base station only when the quality is lowered, then the base station can schedule the channels by avoiding such a line whose quality is deteriorated, while suppressing power consumption.

Also, in the conventional technique, when the channel quality between the mobile station and the relay station is deteriorated, the relay station notifies the quality deterioration to the base station and the base station performs the re-scheduling operation. As a result, a lengthy time is required until signaling of channels is newly performed from the base station, and the mobile station has continuously used the channel whose quality is low until the new channel-allocation is notified. In contrast to the above-explained conventional technique, in accordance with the present embodiment, the channel allocated between the mobile station and the relay station, and the channel allocated between the relay station and the base station are alternately used, so that such a frequency at which the channel whose quality is low is used can be reduced.

It should also be understood that the present embodiment have exemplified such an example that the channels "CHs" are traded with each other every 1 frame. Alternatively, a rule for trading the channels "CHs" with each other every "N" frames may be commonly utilized between the mobile station 100 and the relay station 200. Also, although the relay station 200 has relayed the packet received in one preceding frame, the relay station 200 may alternatively relay such a packet received in two, or more preceding frames, or another packet which has been stored in a buffer.

As a scheduling method by a base station, such a rule may be alternatively and commonly utilized that while only a channel "CH" for a mobile station may be designated, a relay station may first of all use either a channel whose channel number is small or another channel whose channel number is large among channels which have been allocated to a mobile station in charge.

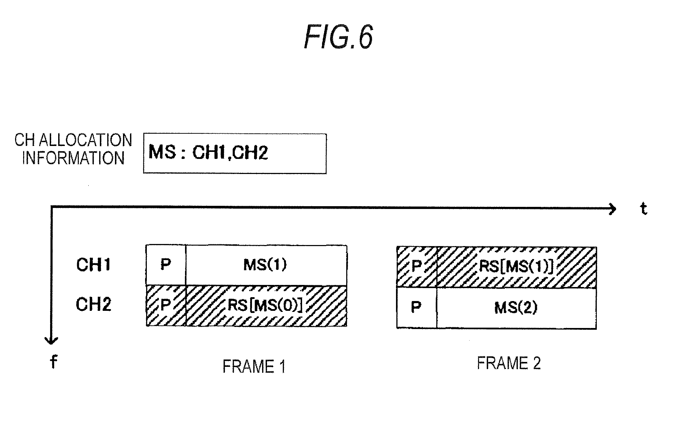

Fig. 6 shows an example of the above-described channel-allocation method. A base station instructs that the channels "CH1" and "CH2" are allocated to the mobile station "MS" based upon the CH allocation information. At this time, while the relay station "RS" has also received this allocation information, the relay station "RS" recognizes that the channels "CH1" and "CH2" have been allocated to the mobile station "MS." Thus, among the channels "CHs" allocated to the mobile station "MS", the channel "CH2" whose channel number is large is used by the relay station in the frame 1. Also, among the channels "CHs" allocated to the mobile station "MS", the mobile station "MS" uses the channel "CH1" whose channel number is small in the frame 1. As previously described, since it is so arranged that while the predetermined rule is commonly used between the mobile station "MS" and the relay station "RS" corresponding thereto, such a channel "CH" which has been allocated to the own station is specified based upon the allocation information notified from the base station and the commonly used rule. As a result, signaling of channels from the base station can be reduced.

### (EMBODIMENT 2)

In the present embodiment 2, when a communication is established between a mobile station and a relay station, both a channel which has been allocated between the mobile station and the relay station, and another channel which has been allocated between the relay station and a base station are used in a rotation manner. When the channels "CHs" are rotated to be used, a total number of channels "CHs" capable of measuring qualities of lines between the mobile station and the relay station is increased.

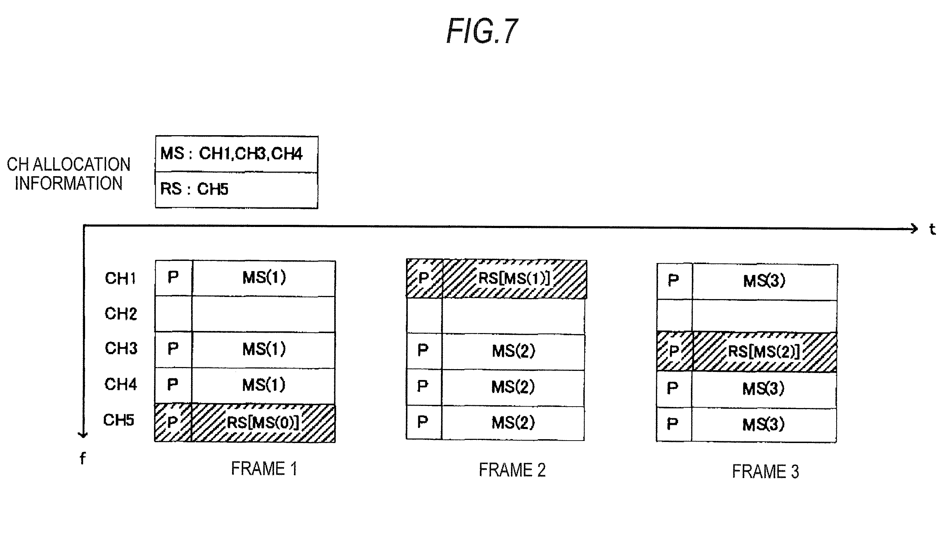

A description is made of operations of the present embodiment with reference to a frame structural diagram (Fig. 7). Before a frame 1, while both the relay station and the mobile station have received such a channel-allocation information which has already been allocated by the base station, channels "CH1", "CH3", "CH4" have been allocated between the mobile station "MS" and the relay station "RS", whereas a channel "CH5" has been allocated between the relay station "RS" and the base station "BS." In the frame 1, the mobile station "MS" transmits a packet "MS(1)" to the relay station "RS" via the channels "CH1", "CH3", "CH4", and the relay station "RS" relays a packet "MS(0)" to the base station "BS" via the channel "CH5" in accordance with the allocation information.

In a frame 2, if new CH allocation information is not issued, then the channels "CHs" are traded in the rotation manner. In this example, it is assumed that a rotation amount is 1. Both the mobile station "MS" and the relay station "RS" rotate the channels "CH1", "CH3", "CH4", which have been allocated between the mobile station "MS" and the relay station "RS" in combination with the channel "CH5" which has been allocated between the relay station "RS" and the base station "BS." As a consequence, the channel which is used by the relay station "BS" is moved from the channel "CH5" to the channel "CH1", and the channels which are used by the mobile station "MS" are moved from the channels "CH1", "CH3", "CH4" to the channels "CH3", "CH4", "CH5."

Similarly, in a frame 3, if new CH allocation information is not issued, then the channels "CHs" are rotated. When the channels "CHs" are rotated, the channel which is used by the relay station "RS" is moved to the channel "CH3", and the channels which are used by the mobile station "MS" are moved to the channels "CH4", "CH5", "CH1."

In accordance with the present embodiment, the channels are utilized in the rotation manner in the communication between the mobile station and the relay station. As a result, a total number of the channels capable of measuring the line qualities between the mobile station and the relay station can be increased, and the line qualities as to the plurality of channels can be measured in a high efficiency without giving adverse influences to communications made by other mobile stations.

It should be noted that either the base station or the relay station may alternatively designate channels "CHs" which should be contained in the channel rotation, and may alternatively restrict the designated channels "CHs." Also, although the description has been made of such an example that the shift amount of the rotation is 1, this shift amount may be alternatively selected as "N." Alternatively, this shift amount may be notified by the base station.

It should also be noted that as the scheduling method by the base station, only a channel "CH" for the mobile station and a shift amount may be alternatively notified. The relay station firstly uses the channel "CH" whose channel number is small among the channels which have been allocated to the mobile station to be handled, and shifts the transmission channel "CH" in accordance with the notified shift amount. As a result, the shift amount is merely notified with respect to the relay station, so that the mobile station can transmit by using such a channel "CH" other than the channels "CHs" which are used by the relay station without notifying the shift amount for the mobile station.

Alternatively, as the scheduling method of the base station, such a signal (CH transition pattern) may be notified, which indicates a CH transition order of the relay station, and also, the channel "CH" for the mobile station, and the channel "CH" for the relay station may be notified. The above-described CH transition pattern indicates a transition pattern every frame, while a table indicative of this transition pattern is commonly used by the base station, the mobile station, and the relay station.

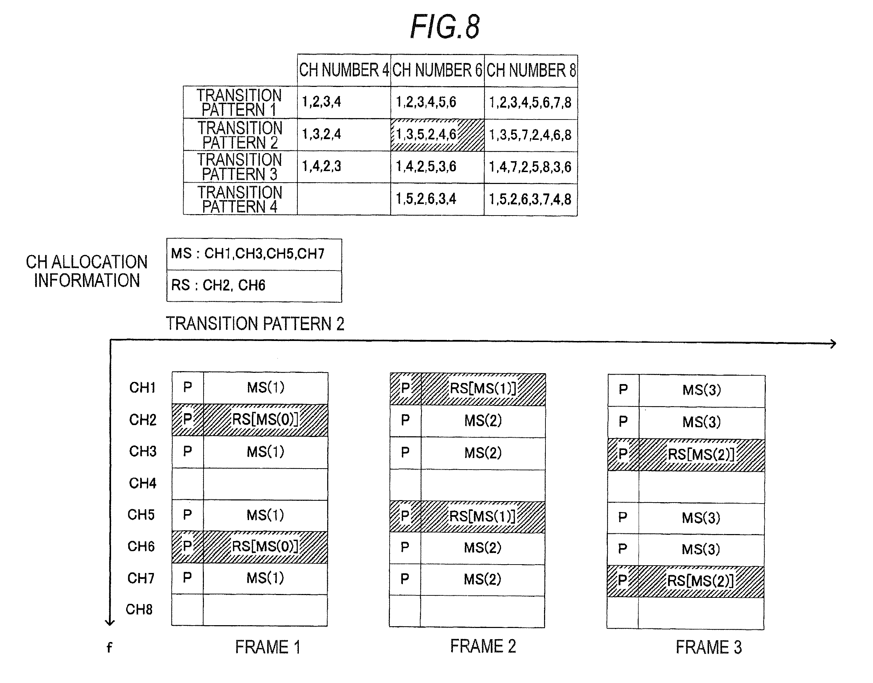

Referring now to Fig. 8, a description is made of a table example of the transition pattern and a CH allocating method. A base station, a relay station, and a mobile station have previously and commonly used such a table for representing transition patterns with respect to each of allocated channel numbers. In this drawing, an example in which CH numbers are 4, 6, 8 has been exemplified.

When such a case of CH number "6" is exemplified, a transition pattern 2 has been constructed of 1, 3, 5, 2, 4, and 6. As to 1, 3, 5, 2, 4, and 6, it is so considered that a firstly allocated channel "CH" among the usable channels "CHs" is "1", and other usable channels "CHs" are 2, 3, 4, 5, 6 in a direction along which numbers become large. When the CH number exceeds a maximum value, the channel number is returned to the first channel number.

In this example, as represented in the CH allocation information, while channels "CH1", "CH3", "CH5", and "CH7" have been allocated to the mobile station "MS", channels "CH2" and "CH6" have been allocated to the relay station "RS." As a result, if usable channels "CHs" are arranged in the channel number order, then these usable channels "CHs" become "CH1", "CH2", "CH3", "CH5", "CH6", and "CH7" (total CH number is 6). Also, such channels "CHs" which can be firstly used by the relay station "RS" correspond to the channels "CH2" and "CH6" which have been allocated. A transition pattern has been defined as the transition pattern 2.

As a consequence, first of all, while an attention is paid to the channel "CH2" which has been firstly allocated to the relay station "RS", if numerals are given, then the following result is made: 1 :CH2, 2:CH3, 3:CH5, 4:CH6, 5:CH7, and 6:CH1. Since the transition patterns are 1, 3, 5, 2, 4, and 6, the channels are moved as follows: CH2, CH5, CH7, CH3, CH6, and CH1.

Similarly, while an attention is paid to the channel "CH6" which has been firstly allocated to the relay station "RS", if numerals are given, then the following result is made: 1:CH6, 2:CH7, 3:CH1, 4:CH2, 5:CH3, and 6:CH5. Since the transition patterns are 1, 3, 5, 2, 4, 6, the channels are moved as follows: CH6, CH1, CH3, CH7, CH2, and CH5.

As previously described, while the table is commonly used and the channels are allocated, if the relay station changes the channels "CHs" in the transition manner, then the signaling amount can be reduced. Also, the mobile station may merely use such a channel other than the channel "CH" through which the relay station transmits, so that the transition pattern need not be transmitted toward the mobile station.

### (EMBODIMENT 3)

In the present embodiment 3, when a relay station judges that a quality of a channel "CH" allocated between a mobile station and the relay station has been deteriorated, the relay station notifies the deterioration of the channel "CH" to the mobile station, and ceases that the channel "CH" allocated between the mobile station and the relay station, and also, a channel "CH" allocated between the relay station and a base station are alternately utilized, and then, fixes the channels "CHs." Only such channels "CHs" whose qualities are good can be used between the mobile station and the relay station.

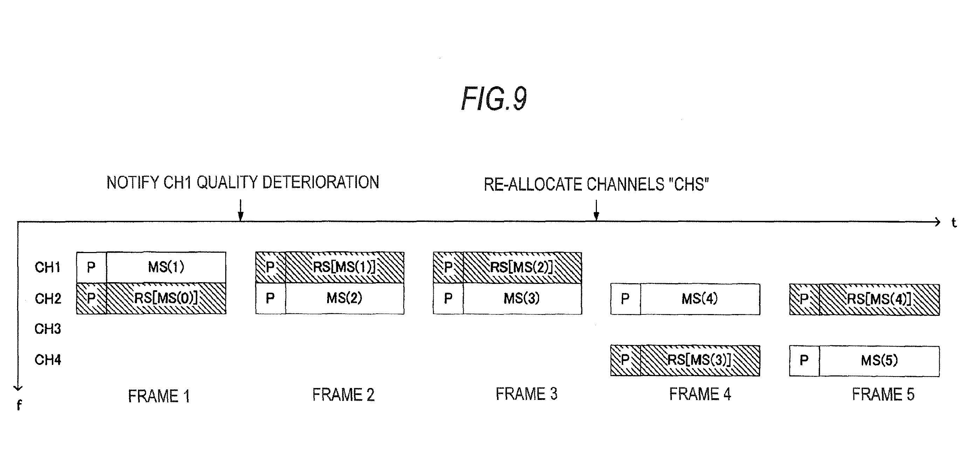

A description is made of operations of the present embodiment 3 with reference to a frame structural diagram (Fig. 9). Before a frame 1, a frame "CH1" has been allocated between the mobile station "MS" and the relay station "RS", whereas a channel "CH2" has been allocated between the relay station "RS" and the base station "BS." In the frame 1, the mobile station "MS" transmits a packet "MS(1)" via the channel "CH1" to the relay station "RS", and the relay station "RS" transmits a packet "RS(MS(0))" via the channel "CH2" to the base station "BS."

If in the frame 1, the relay station "RS" judges that a quality of the channel "CH1" between the mobile station "MS" and the relay station "RS" has been deteriorated, then the relay station "RS" transmits quality deterioration notification to the mobile station "MS." The mobile station "MS" which could grasp such a fact that the quality of the channel "CH1" has been deteriorated transmits a packet to the relay station "RS" by using the channel "CH2" (namely, channel which had been allocated between relay station "RS" and base station "BS" in frame preceding to frame 1) until re-allocation of a channel "CH" is transmitted from the base station "BS."

Until the re-allocation of the channel "CH" is newly issued, the relay station "RS" relays a packet to the base station "BS" by using such a channel "CH1" (namely, channel whose quality had been deteriorated and used between mobile station "MS" and relay station "RS"), the quality deterioration of which was notified to the mobile station "MS." In this example, since a channel "CH" is re-allocated before a frame 4, the relay station "RS" transmits by using the newly allocated channel "CH2 in the frame 4.

Also, after the channel has been re-allocated, the channels "CHs" are alternately and again used in a similar manner to that of the embodiment 1. As a consequence, in the frame 4, the mobile station "MS" has used the channel "CH2" and the relay station "RS" has used the channel "CH4." Thus, in a frame, these channels are traded with each other, so that the mobile station "MS" uses the channel "CH4", and the relay station "RS" uses the channel "CH2."

As previously explained, if the relay station "RS" receives the pilot signal, then the relay station "RS" can measure the line quality, and notifies the measurement result to the base station "BS." If the relay station "RS" notifies the line quality to the base station "BS", then the base station "BS" can perform the channel re-scheduling operation, while avoiding the channel whose quality is deteriorated.

### [BLOCK DIAGRAM OF RELAY STATION APPARATUS]

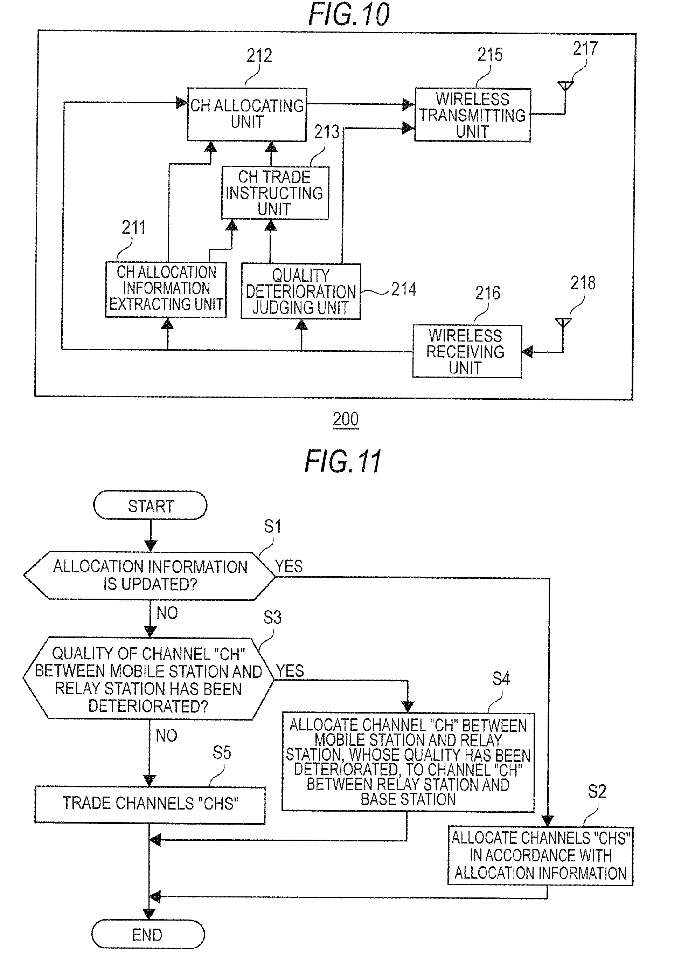

Fig. 10 is a block diagram of an arrangement of a relay station apparatus according to the present embodiment 3. A description as to commonly used structural elements of Fig. 4 will be omitted in Fig. 10. A quality deterioration judging unit 214 judges a deterioration of a quality of a signal which is received from the mobile station 100. A judgment result is entered to a CH trade instructing unit 213 and a wireless transmitting unit 215.

In the CH trade instructing unit 213, if the allocation information corresponds to the latest allocation information, then the CH trade instructing unit 213 instructs the CH allocating unit 212 in such a manner that the CH allocating unit 212 obeys the latest CH allocation information, whereas if the allocation information does not correspond to the latest allocation information, and if the quality deterioration judging unit 214 judges that a quality of the channel between the mobile station 100 and the relay station 200 has not been deteriorated, then the CH trade instructing unit 213 instructs the CH allocating unit 212 to trade the channels "CHs." To the contrary, if the quality deterioration judging unit 214 judges that a quality of the channel between the mobile station 100 and the relay station 200 has been deteriorated, then the CH trade instructing unit 213 instructs the CH allocating unit 212 to use the channel "CH" between the mobile station 100 and the relay station 200, the quality of which has been deteriorated.

### [FLOW CHART OF RELAY STATION APPARATUS]

Referring now to a flow chart (Fig. 11), a description is made of operations as to the above-described relay apparatus.
[Step 1] A judgment is made whether or not CH allocation information is updated by checking whether or not the CH allocation information has been extracted by the CH allocation information extracting unit 211. When the CH allocation information is updated, the process operation is advanced to Step 2, whereas when the CH allocation information is not updated, the process operation is advanced to Step 3.

[Step 2] In the case that the allocation information is updated, the CH allocating unit 212 allocates channels "CHs" in accordance with the allocation information. [Step 3] In such a case that the allocation information is not updated, the quality deterioration judging unit 214 judges whether or not a quality of the channel "CH" between the mobile station 100 and the relay station 200 has been deteriorated. If the channel quality has been deteriorated, then the process operation is advanced to Step 4, whereas if the channel quality has not been deteriorated, then the process operation is advanced to Step 5.

[Step 4] In the case that the quality of the channel "CH" has been deteriorated, the CH trade instructing unit 213 instructs the CH allocating unit 212 in such a manner that the channel "CH" whose quality has been deteriorated between the mobile station 100 and the relay station 200 is allocated to such a channel between the relay station 200 and the base station 300. [Step 5] In the case that the quality of the channel "CH" is not deteriorated, the CH trade instructing unit 213 instructs the CH allocating unit 212 in such a manner that the channel "CH" used between the mobile station 100 and the relay station 200 in the preceding frame is traded with the channel used between the relay station 200 and the base station 300.

### [BLOCK DIAGRAM OF MOBILE STATION APPARATUS]

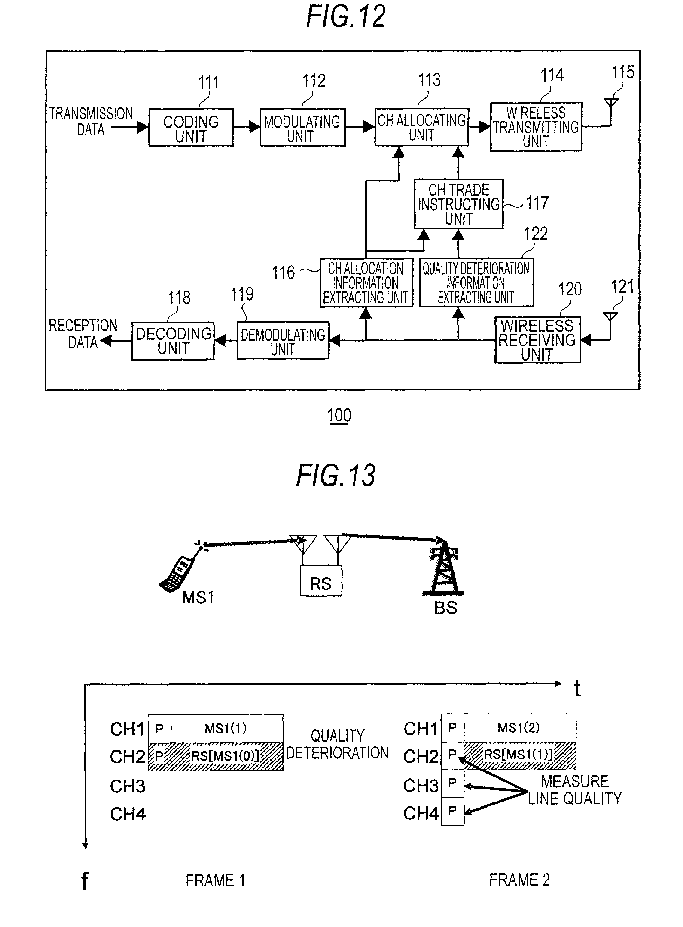

Fig. 12 is a block diagram of the mobile station 100. A description as to commonly used structural elements of Fig. 5 and Fig. 10 will be omitted in Fig. 12. The quality deterioration information extracting unit 122 extracts quality deterioration information transmitted by the relay station 200. The extracted quality deterioration information is entered to a CH trade instructing unit 117.

In the CH trade instructing unit 117, if the CH allocation information corresponds to the latest CH allocation information, then the CH trade instructing unit 117 instructs the CH allocating unit 113 in such a manner that the CH allocating unit 113 allocates channels "CHs" in accordance with the CH allocation information, whereas if the CH allocation information does not correspond to the latest allocation information, then the CH trade instructing unit instructs the CH allocating unit 113 to trade the channels "CHs" when the quality between the mobile station 100 and the relay station 200 has not been deteriorated based upon the quality deterioration information. If the quality has been deteriorated, then the CH trade instructing unit 117 instructs the CH allocating unit 113 to use such a channel "CH" whose quality has not been deteriorated and which has been allocated between the relay station 200 and the base station 300.

In accordance with the present embodiment, when the relay station judges that the quality of the channel "CH" between the mobile station and the relay station has been deteriorated, the relay station notifies the quality deterioration of the channel "CH" to the mobile station, and ceases to alternately use the channel "CH" allocated between the mobile station and the relay station, and the channel "CH" allocated between the relay station and the base station so as to fix the channels "CHs." As a result, only such a channel "CH" whose quality is better can be used between the mobile station and the relay station.

The present embodiment has exemplified that if the quality of the channel "CH" between the mobile station and the relay station is deteriorated in such a case that the channel "CH" between the mobile station and the relay station, and the channel "CH" between the relay station and the base station are alternately used (embodiment 1), then the relay station ceases to alternately use the channel "CH" between the mobile station and the relay station, and also, the channel "CH" between the relay station and the base station. Alternatively, in such a case that the plurality of channels "CHs" are used in the rotation manner as previously explained in the embodiment 2, if a quality of the channel "CH" between the mobile station and the relay station is deteriorated, the rotational use of the channels "CHs" may be ceased.

It should be understood that in the above-explained respective embodiments, the description has been made of such a case that the inventive idea of the present invention has been applied to the up-stream line. Alternatively, the inventive idea of the present invention may be embodied in a down-stream line in a similar manner. That is, a relay station may alternatively relay and transmit control signals such as channel-allocation information and down-stream line data, which are transmitted from a base station, to a mobile station via a down-stream line channel in a similar manner to that of the above-explained example.

It should also be understood that the frames 1, 2, and 3 in the above-explained respective embodiments are not always frames which are not continued to each other. In other words, the frame 2 may correspond to such a frame subsequent to the frame 1, and the frame 3 may correspond to such a frame subsequent to the frame 2.

Also, in the above-described respective embodiments, another relay station may be furthermore and alternatively provided either between the relay station and the base station or between the mobile station and the relay station. Alternatively, the signal transmitted from the mobile station may be received by the base station via a plurality of relay stations.

Also, it should be understood that the base station and the mobile station as explained in each of the above-described embodiments may be alternatively expressed as a "Node B" and a "UE", respectively. Furthermore, the relay station as explained in each of the above-described embodiments may be alternatively referred to as a repeater, a simple base station, a cluster head, and the like.

Also, in the above-explained respective embodiments, such a case that the present invention is arranged by employing the hardware has been exemplified. Alternatively, the present invention may be realized by employing software.

Further, each of the functional blocks employed in the descriptions of the respective embodiments is typically realized as an LSI corresponding to an integrated circuit. Alternatively, these functional blocks may be individually realized as a 1-chip form, or a portion of these functional blocks may be realized as a 1-chip form, otherwise, all of these functional blocks may be manufactured in a single semiconductor chip. Although the respective functional blocks have been manufactured in the LSI form in this case, this LSI may be alternatively referred to as an IC, a system LSI, a super LSI, an ultra LSI, depending upon differences in integration degrees.

Also, the method for manufacturing these functional blocks in the integrated circuit form is not limited only to the LSI, but may be alternatively realized by employing an exclusively-designed circuit, or a general-purpose processor. Moreover, the method for manufacturing these functional blocks in the integrated circuit form may be alternatively realized by utilizing an FPGA (Field Programmable Gate Array) which can be programmed after the LSI has been manufactured, or a reconfigurable processor capable of reconstructing connections and setting conditions of circuit cells employed inside the LSI.

In addition, if such new integrated circuit manufacturing techniques capable of trading LSIs will be developed based upon advanced semiconductor techniques, or other techniques derived from the above-explained semiconductor techniques in future, then the functional blocks may be apparently manufactured in integrated circuits by utilizing the new integrated circuit manufacturing techniques. Possibly, biotechnology methods may be similarly adapted.

While the present invention has been described in detail, or with reference to the specific embodiments, it is apparent for an ordinarily skilled engineer that the present invention may be modified and changed in various manners without departing from the technical scope and spirit of the present invention.
The present patent application has been filed on the basis of claiming Japanese Patent Application (JP2006-292102) filed on October 27, 2006, the contents of which have been incorporated herewith as references.

### Industrial Applicability

The present invention has been suitably applied to such a communication system (for instance, multi-hop system) that a wireless communication system, for example, a mobile station, a base station, and the like performs a wireless communication operation via a relay station.

## Claims

1. A wireless communication apparatus for relaying a communication between a mobile station and a base station in accordance with a predetermined channel-allocation rule, the wireless communication apparatus comprising:
a function for alternately using a channel which has been allocated between the mobile station and the wireless communication apparatus, and a channel which has been allocated between the base station and the wireless communication apparatus in accordance with a rule which is commonly used by the mobile station and the wireless communication apparatus.

2. The wireless communication apparatus as claimed in claim 1, comprising:
a channel-allocation information extracting unit which extracts channel-allocation information transmitted from the base station;
a channel-trade instructing unit which outputs an instruction that the channel allocated between the base station and the wireless communication apparatus is traded with the channel allocated between the mobile station and the wireless communication apparatus; and
a channel allocating unit which allocates channels in accordance with the instruction of the channel-trade instructing unit.

3. The wireless communication apparatus as claimed in claim 2, wherein:
if the channel-allocation information corresponds to the latest channel-allocation information, then the channel-trade instructing unit outputs an instruction that the channels are allocated in accordance with the latest channel-allocation information, whereas if the channel-allocation information does not correspond to the latest channel-allocation information, then the channel-trade instructing unit outputs an instruction that the channel allocated between the base station and the wireless communication apparatus, and also, the channel allocated between the mobile station and the wireless communication apparatus are alternately used.

4. A wireless communication apparatus for relaying a communication between a base station and a mobile station in accordance with a predetermined channel-allocation rule, the wireless communication apparatus comprising:
a function for using a plurality of channels which have been allocated between the mobile station and the wireless communication apparatus, and also, a channel which has been allocated between the base station and the wireless communication apparatus in a rotation manner in accordance with a rule which is commonly used between the mobile station and the wireless communication apparatus.

5. The wireless communication apparatus as claimed in claim 4, comprising:
a function that if channel-allocation information transmitted from the base station does not correspond to the latest channel-allocation information, then the plurality of channels which have been allocated between the mobile station and the wireless communication apparatus, and also, the channel which has been allocated between the base station and the wireless communication apparatus are used in the rotation manner; whereas if the channel-allocation information corresponds to the latest channel-allocation information, then the channels are used in accordance with the latest channel-allocation information.

6. The wireless communication apparatus as claimed in claim 2, comprising:
a quality deterioration judging unit which judges a deterioration of a quality of a signal received from the mobile station, and wherein:
the channel-trade instructing unit outputs an instruction that the channels are allocated in accordance with the channel-allocation information if the channel-allocation information corresponds to the latest channel-allocation information; if the channel-allocation information does not correspond to the latest channel-allocation information, in such a case that the quality deterioration judging unit judges that the quality of the signal received from the mobile station has not be deteriorated, then the channel-trade instructing unit outputs an instruction that the channel allocated between the mobile station and the wireless communication apparatus is traded with the channel allocated between the base station and the wireless communication apparatus, whereas in such a case that the quality of the signal has been deteriorated, the channel-trade instructing unit outputs an instruction that the channel used in the communication between the mobile station and the wireless communication apparatus is used in a communication between the base station and the wireless communication apparatus.

7. The wireless communication apparatus as claimed in claim 4, comprising:
means for receiving a channel transition pattern transmitted from the base station.

8. The wireless communication apparatus as claimed in claim 4 or claim 7, comprising:
means for holding a table indicative of the channel transition pattern.

9. A wireless communication apparatus for communicating a base station via a relay station in accordance with a predetermined channel-allocation rule, the wireless communication apparatus comprising:
a function for alternately using a channel which has been allocated between the relay station and the wireless communication apparatus, and a channel which has been allocated between the base station and the relay station in accordance with a rule which is commonly used by the relay station and the wireless communication apparatus.

10. The wireless communication apparatus as claimed in claim 9, comprising:
a channel-allocation information extracting unit which extracts channel-allocation information transmitted from the relay station;
a channel-trade instructing unit which outputs an instruction that the channel allocated between the relay station and the wireless communication apparatus is traded with the channel allocated between the relay station and the base station; and
a channel allocating unit which allocates the channels in accordance with the instruction of the channel-trade instructing unit.

11. The wireless communication apparatus as claimed in claim 10, wherein:
if the channel-allocation information inputted from the channel-allocation information extracting unit corresponds to the latest channel-allocation information, then the channel allocating unit allocates the channels in accordance with the latest channel-allocation information, whereas if the channel-allocation information inputted from the channel-allocation information extracting unit does not correspond to the latest channel-allocation information, then the channel allocating unit allocates the channels in accordance with the channel-trade instruction instructed from the channel-trade instructing unit.

12. A wireless communication apparatus for communicating a base station via a relay station in accordance with a predetermined channel-allocation rule, the wireless communication apparatus comprising:
a function for using a plurality of channels which have been allocated between the relay station and the wireless communication apparatus, and also, a channel which has been allocated between the base station and the relay station in a rotation manner in accordance with a rule which is commonly used between the relay station and the wireless communication apparatus.

13. The wireless communication apparatus as claimed in claim 12, comprising:
a function that if channel-allocation information transmitted from the relay station does not correspond to the latest channel-allocation information, then the plurality of channels which have been allocated between the relay station and the wireless communication apparatus, and also, the channel which has been allocated between the base station and the relay station are used in the rotation manner; whereas if the channel-allocation information corresponds to the latest channel-allocation information, then the channels are used in accordance with the latest channel-allocation information.

14. The wireless communication apparatus as claimed in claim 9 or claim 12, comprising:
a function that when a notification that a quality of a channel under use is low is received from the relay station, the wireless communication apparatus ceases to use the channel whose quality is low, and continuously uses a channel other than the channel whose quality has been lowered until re-allocation of channels is issued.

15. The wireless communication apparatus as claimed in claim 10, comprising:
a quality deterioration information extracting unit which extracts quality deterioration information transmitted from the relay station, and wherein:
the channel-trade instructing unit outputs an instruction that the channel allocating unit obeys the channel-allocation information if the channel-allocation information corresponds to the latest channel-allocation information; if the channel-allocation information does not correspond to the latest channel-allocation information, in such a case that a quality of the channel allocated between the relay station and the mobile station has not be deteriorated in the quality deterioration information, then the channel-trade instructing unit outputs an instruction that the channel allocated between the relay station and the wireless communication apparatus is traded with the channel allocated between the base station and the relay station, whereas in such a case that the quality of the signal has been deteriorated, the channel-trade instructing unit outputs an instruction that the channel allocated between the relay station and the mobile station is used.

16. The wireless communication apparatus as claimed in claim 12, comprising:
means for receiving a channel transition pattern transmitted from the relay station.

17. The wireless communication apparatus as claimed in claim 16, comprising:
means for holding a table indicative of the channel transition pattern.

18. The wireless communication apparatus as claimed in claim 1 or claim 9, wherein:
the rule which is commonly used between the relay station and the mobile station corresponds to a rule that the rule designates two channels which are used between the mobile station and the relay station, the relay station firstly uses a channel whose channel number is small or large, and the mobile station firstly uses a channel whose channel number is large or small.

19. A wireless communication method for relaying a communication between a base station and a mobile station in accordance with a predetermined channel-allocation, the wireless communication method comprising the steps of:
allocating, in such a case that channel-allocation information transmitted from the base station is updated, a channel to be used in a communication between the mobile station and the base station in accordance with the channel-allocation information;
judging, in such a case that the channel-allocation information transmitted from the base station is not updated, whether a quality of a channel used in a communication with the mobile station has been deteriorated;
allocating, in such a case that the quality deterioration has been made in the channel used in the communication with the mobile station, the channel used in the communication with the mobile station is allocated to the channel used in the communication with the base station; and
trading, in such a case that the quality deterioration has not been made in the channel used in the communication with the mobile station, the channel used in the communication with the mobile station with the channel used in the communication with the base station.
